# EUROPEAN PATENT APPLICATION

(11) **EP 2 617 501 A1**
(43) Date of publication of application: **24.07.2013**
(21) Application number: 12151522.5
(22) Date of filing: 18.01.2012
(51) Int. Cl.: B21L 9/04, B62M 9/00, F16G 13/07

(54) **Bicycle chain**

(71) Applicant: Wang, Jessie, Taichung City 411 (TW)
(72) Inventor: Wang, Jessie, Taichung City 411 (TW)
(74) Representative: Viering, Jentschura & Partner

(57) **Abstract**

A bicycle chain includes plural plate members (10) and plural pins (20). The plate member (10) has a head portion (11) and a tail portion (12). The head portion (11) is larger than the tail portion (12) in width. The pins (20) connect the plate members (10). The head portion (11) has two head sidewalls (111) and a shield (112) located between tops of the head sidewall (111). The head sidewall (111) has a head pinhole (114). The tail portion (12) has two tail sidewalls (121) each extended from the head sidewall (111). The tail sidewall (121) has a tail pinhole (122). The pin (20) passes through the head pinhole (114a) of one plate member (10a) and the tail pinhole (122) of the adjacent plate member (10) so that the plate members (10, 10a) are linked tandem and pivotable with respect to each other.

## Description

### 1. Technical Field

The present invention relates to a bicycle chain according to the preamble of Claim 1. Accordingly, the present invention severally relates to bicycle parts and more particularly, to a bicycle chain that has a shield for preventing foreign matters from invading the chain.

### 2. Description of Related Art

A bicycle chain is one part of the bicycle transmission system, and connects a chainwheel with a freewheel, so as to allow the rotation of a crank driven by a pedaling motion to rotate a rear wheel.

One conventional bicycle chain is shown in Taiwan Patent No. TW M279774. The prior-art device comprises plural pairs of plate members and plural pins. Each said pair of plate members has a wide head portion and a narrow tail portion. The pins serve to connect the head and tail portions of the adjacent plate members so as to form the chain.

Taiwan Patent No.TW I332553 has proposed another bicycle chain that comprises plural pairs of outer plate members, plural pairs of inner plates and a plurality of pins. An interval between the paired outer plate members is larger than an interval between the paired inner plates. The pins serve to connect adjacent outer and inner plates.

In both of the known bicycle chains, the paired plate members are open upward and downward. Thus, when the chain is running foreign matters such as a cyclist's pant/skirt edges, shoelaces, tend to fall between or get entangled between the plate members. In addition, dust and chippings are likely to enter and wear the plate members.

### SUMMARY OF THE INVENTION

In view of the shortcomings of the prior art, the primary objective of the present invention is to provide a bicycle chain whose plate members each have one side closed or semi-closed so as to prevent foreign matters from being entangled by or invading between the plate members.

To achieve these and other objectives of the present invention, the invention provides a bicycle chain according to claim 1. Further embodiments of the invention are described in the dependent claims.

### BRIEF DESCRIPTION OF THE DRAWINGS

The invention as well as a preferred mode of use, further objectives and advantages thereof will be best understood by reference to the following detailed description of illustrative embodiments when read in conjunction with the accompanying drawings, wherein:
**Figure 1** is a partially exploded view of a bicycle chain according to a first embodiment of the present invention;
**Figure 2** is a schematic drawing illustrating formation of a plate member used in the bicycle chain of **Figure 1****;**
**Figure 3** is a perspective view of a plate member according to a second embodiment of the present invention;
**Figure 4** is a perspective view of a plate member according to a third embodiment of the present invention;
**Figure 5** is a partially exploded view of a bicycle chain according to a fourth embodiment of the present invention;
**Figure 6** is a perspective view of a plate member according to a fifth embodiment of the present invention; and
**Figure 7** is a perspective view of a plate member according to a sixth embodiment of the present invention.

### DETAILED DESCRIPTION OF THE INVENTION

The following preferred embodiments when read with the accompanying drawings are made to clearly exhibit the above-mentioned and other technical contents, features and effects of the present invention. However, the accompanying drawings are intended for reference and illustration, but not to limit the present invention and are not made to scale. Unless otherwise noted, like elements will be identified by identical numbers throughout all figures.

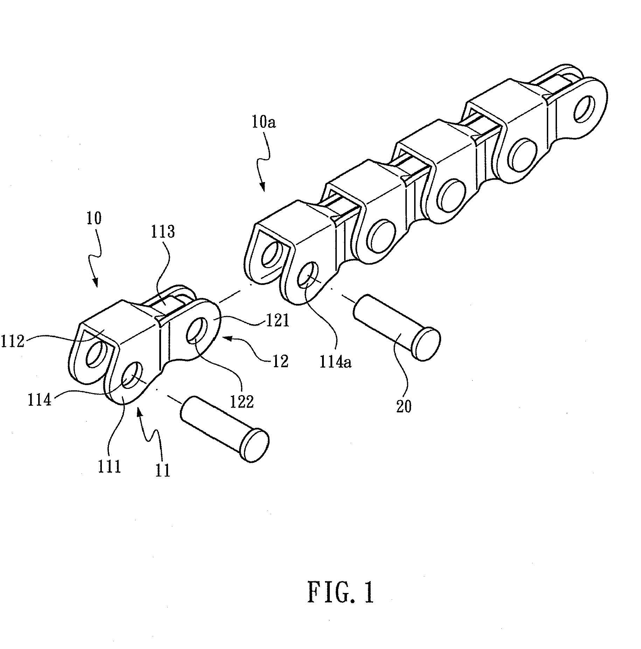

Referring to **Figure 1****,** according to a first embodiment of the present invention, a bicycle chain is composed of a plurality of plate members **10** and a plurality of pins **20.**

Each of the plate members **10** has a head portion **11** and a tail portion **12,** wherein the head portion **11** has a width greater than a width of the tail portion **12.** The head portion **11** has apair of head sidewall **111,** a shield **112** and an extended cover **113.** Each of the paired head sidewalls **111** is formed with a head pinhole **114** for allowing a pin **20** to pass therethrough. The shield **112** is connected between tops of the paired head sidewalls **111.** In the present embodiment, the shield **112** is integratedly formed with the tops of the paired head sidewalls **111** and the extended cover **113** is extended from the shield **112** toward the tail portion **12.** The tail portion **12** has a pair of tail sidewalls **121.** Each said tail sidewall **121** is extended lengthwise from the corresponding head sidewall **111** and is formed with a tail pinhole **122** for allowing a pin **20** to pass therethrough. The extended cover **113** is substantially over the tail sidewalls **121,** with a length not greater than the length of each said tail sidewalls **121** and a width approximately equal to an interval between the paired tail sidewalls **121.**

The pins **20** serve to link the head portion **11** of one said plate member **10** to the tail portion **12** of an adjacent said plate members **10** by passing through the head pinhole **114a** of one said plate member **10a** and the tail pinhole **122** of one adjacent said plate member **10** successively, such that the tandem linked plate members **10, 10a** are pivotable with respect to each other.

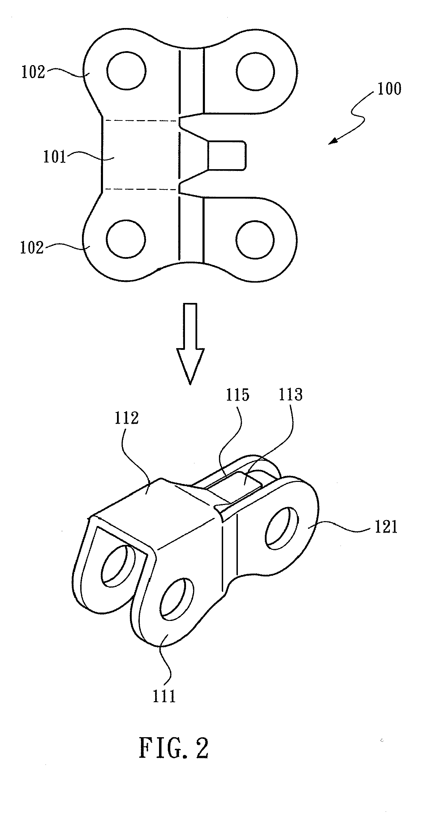

Further referring to **Figure 2****,** preferably, the plate member **10** of the first embodiment of the present invention is a preform **100** to be subject to a punching process. The preform **100** is formed thereon with a shield segment **101** and a pair of sidewall segments **102** flanking the shield segment **101.** The shield segment **101** has a profile corresponding to a combination of the shield **112** and the extended cover **113,** while each of the sidewall segments **102** has a profile corresponding to a combination of the head sidewall **111** and the tail sidewall **121.** By punching the preform **100,** the paired sidewall segments **102** are bent downward to become perpendicular to the shield segment **101,** thereby such forming the plate member **10** that gaps **115** exist between the extended cover **113** and the tail sidewalls **121.**

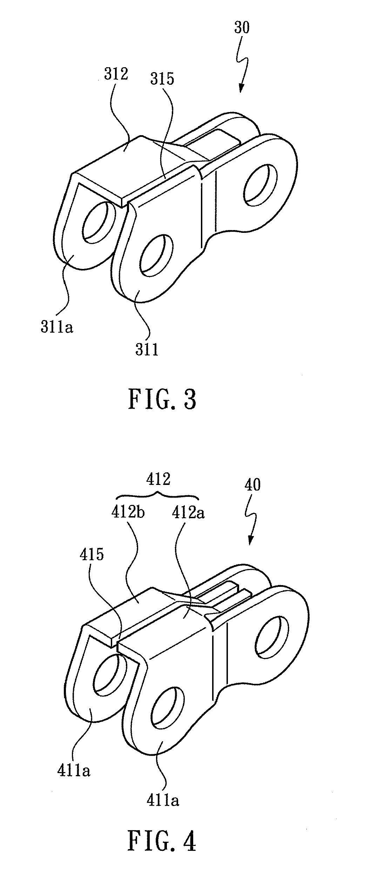

Referring to **Figure 3****,** in a second embodiment of the present invention, the shield **312** is integratedly formed with the top of one of the paired head sidewall **311a,** and a gap **315** is formed between the shield **312** and the other head sidewall **311,** so that a semi-close status is created over the plate members **30** to effectively prevent foreign matters from invasion.

Referring to **Figure 4****,** in a third embodiment of the present invention, the shield **412** includes two shield units **412a, 412b,** which are integratedly formed with the tops of the head sidewalls **411a, 411b,** respectively. A gap **415** is left between the shield units **412a, 412b.** This also forms a semi-close status over the plate members **40.** In the present embodiment, the gap **415** is linear, while in other embodiments, the gap **415** may be curved, wavy or otherwise.

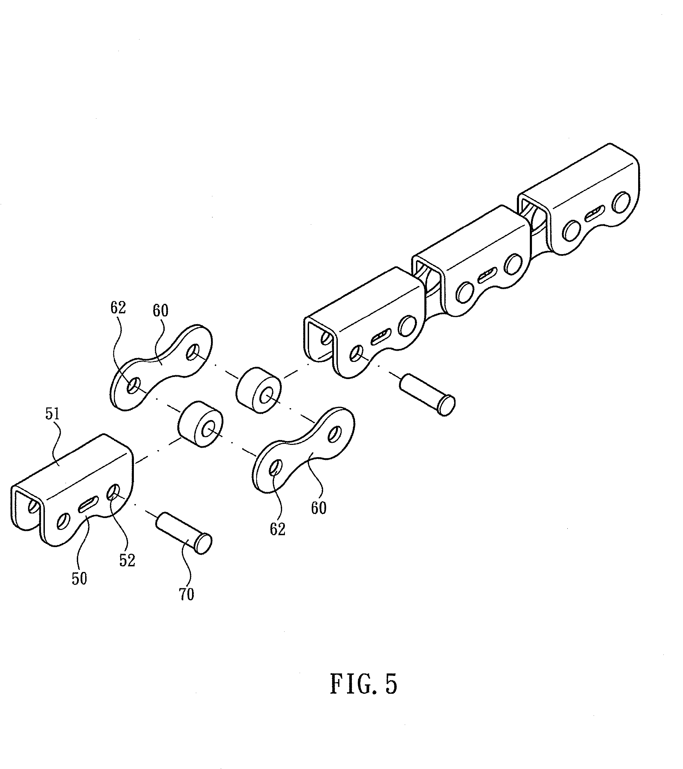

Now referring to **Figure 5****,** a fourth embodiment of the present invention provides an alternative chain that comprises a plurality of outer plate members **50,** plural pairs of inner plates **60** and a plurality of pins **70.**

Each said outer plate member **50** has sidewalls separated by an interval that is greater than an interval between the paired inner plates **60.** Each sidewall of the outer plate member **50** has a pair of horizontally aligned outer pinholes **52** for allowing pins **70** to pass therethrough. The outer plate member **50** has atop a shield **51.** In the present embodiment, the shield **51** is integratedly formed with the tops of the paired sidewalls of the outer plate member **50** so the outer plate member **50** has a closed top. Each said inner plate **60** has a pair of horizontally aligned inner pinholes **62** for allowing pins **70** to pass therethrough.

The pins **70** serve to link the adjacent outer plate members **50** and paired inner plates **60** by passing through the outer pinholes **52** of one said outer plate members **50** and the inner pinholes **62** of one said pair of adjacent inner plates **60** successively, such that the linked outer plate members **50** and inner plates **60** are pivotable with respect to each other.

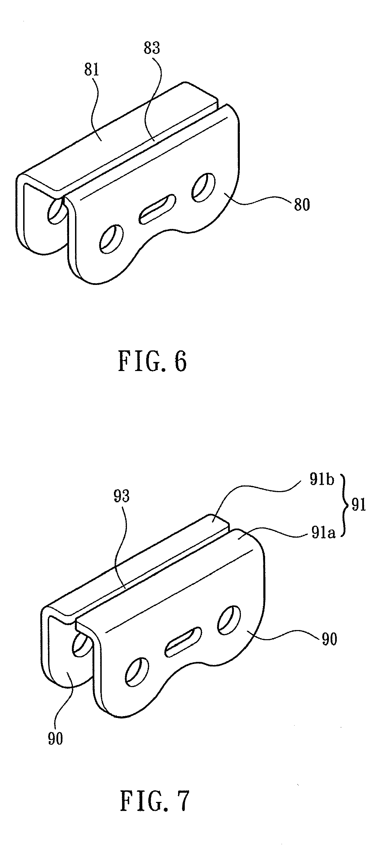

Referring to **Figure 6****,** in a fifth embodiment of the present invention, the shield **81** is integratedly formed with the top of one of the paired sidewalls of the outer plate member **80,** and a gap **83** is left between the shield **81** and the other sidewall of the outer plate member **80,** so a semi-close status is created atop the outer plate member **80.**

Referring to **Figure 7****,** in a sixth embodiment of the present invention, the shield **91** includes two shield units **91a, 91b,** which are integratedly formed with the tops of the sidewalls of the outer plate member **90,** and a gap **93** is left between the two shield units **91a, 91b,** so as to create a similar semi-close status of the outer plate member **90.**

By providing the shield to entirely or partially close the plate members from top, the present invention effectively prevents foreign matters from falling between or being entangled between the plate members. Thus, a cyclist is ensured with safety because his/her pant/skirt edges and shoelaces are well prevented from being unintentionally entangled by the bicycle chain. Also, the service life of the bicycle chain is improved because dust and chippings are blocked from entering and wearing the chain. Furthermore, in some embodiments of the present invention, the plate member is made through punching as a unity and thus is easier to assemble as compared with the conventional chain plates provided as separated parts. In other words, the present invention is useful to improve assembling efficiency of the plate members.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

## Claims

1. A bicycle chain, comprising a plurality of plate members (10) and a plurality of pins (20), each said plate member (10) including a head portion (11) and a tail portion (12), the head portion (11) being larger than the tail portion (12) in width, and the pins (20) serving to connect the head and tail portions (11, 12) of the adjacent plate members (10), the bicycle chain being **characterized in**:
the head portion (11) having a pair of head sidewalls (111) and a shield (112) that is located between the paired head sidewalls (111), each said head sidewall (111) having a head pinhole (114) for allowing one said pin (20) to pass therethrough, each said tail portion (12) having a pair of tail sidewalls (121), each said tail sidewall (121) being extended horizontally from the corresponding head sidewall (111) and having a tail pinhole (122) for one said pin (20) to pass therethrough, and each said pin (20) passing through the head pinhole (114a) of one said plate member (10a) and the tail pinhole (122) of one adjacent said plate member (10), so that the plate members (10, 10a) are linked tandem and are pivotable with respect to each other.

2. The bicycle chain of claim 1, being **characterized in that** the shield (112) is integratedly formed with tops of the paired head sidewalls (111).

3. The bicycle chain of claim 2, being **characterized in that** the head portion (11) further comprises an extended cover (113), which is extended from the shield (112) toward the tail portion (12) and substantially over the paired tail sidewalls (121), wherein the extended cover (113) has a length not greater than a length of each said tail sidewall (121) and has a width approximately equal to an interval between the paired tail sidewalls (121).

4. The bicycle chain of claim 3, being **characterized in that** each said plate member (10) is made by punching a preform (100), the preform (100) comprising a shield segment (101) and a pair of sidewall segments (102) flanking the shield segment (101), the shield segment (101) having a profile corresponding to a combination of the shield (112) and the extended cover (113), each said sidewall segment (102) having a profile corresponding to a combination of the head sidewall (111) and the tail sidewall (121), and by punching the preform (100), the paired sidewall segments (102) being bent and perpendicular to the shield segment (101) so as to form the plate member (10).

5. The bicycle chain of claim 1, being **characterized in that** the shield (312) is integratedly formed with a top of one of the paired head sidewalls (311a), and a gap (315) is left between the shield (312) and the other head sidewall (311).

6. The bicycle chain of claim 2, being **characterized in that** the shield (412) includes two shield units (412a, 412b), which are integratedly formed with the tops of the paired head sidewalls (411a, 411b), respectively, and a gap (415) is defined between the two shield units (412a, 412b).

7. A bicycle chain, comprising a plurality of outer plate members (50), plural pairs of inner plates (60) and a plurality of pins (70), each said outer plate member (50) having two sidewalls separated by an interval that is greater than an interval between said paired inner plates (60), and the pins (70) serving to connect the adjacent outer plate member (50) and inner plates (60), the bicycle chain being **characterized in**:
a shield (51) being provided on tops of the sidewalls of each said outer plate member (50), each said sidewall of the outer plate member (50) having a pair of outer pinholes (52) for the pins (70) to pass therethrough, each said inner plate (60) having a pair of inner pinholes (62) for the pins (70) to pass therethrough, and each said pin (70) passing through the outer pinholes (52) of one said outer plate member (50) and the inner pinholes (62) of the paired inner plates (60), so that the outer plate member (50) and the adjacent paired inner plates (60) are linked tandem and are pivotable with respect to each other.

8. The bicycle chain of claim 7, being **characterized in that** the shield (51) is integratedly formed with the tops of the paired sidewalls of the outer plate members (50).

9. The bicycle chain of claim 7, being **characterized in that** the shield (81) is integratedly formed with the top of one of the paired sidewalls of the outer plate members (80), and a gap (83) is left between the shield (81) and the other sidewall of the outer plate members (80).

10. The bicycle chain of claim 7, being **characterized in that** the shield (91) comprises two shield units (91a, 91b), which are formed integratedly with tops of the paired sidewalls of the outer plate members (90), respectively, and a gap (93) is formed between the two shield units (91 a, 91 b).
